# EUROPEAN PATENT APPLICATION

(11) **EP 4 666 843 A1**
(43) Date of publication of application: **24.12.2025**
(21) Application number: 24764154.1
(22) Date of filing: 27.02.2024
(51) Int. Cl.: A01G 9/02, A01G 9/14, A01G 9/24, A01G 9/029, A01G 7/06

(54) **VERTICAL ROTARY PLANT CULTIVATION SYSTEM**

(30) Priority: 27.02.2023 KR 20230025553
(71) Applicant: Clay Building Co., Ltd., Sejong 30064 (KR)
(72) Inventor: JUNG, Moon-Hyoung, Danyang-gun, Chungcheongbuk-do 27023 (KR)
(74) Representative: BCKIP Part mbB
(86) International application number: PCT/KR2024/002469
(87) International publication number: WO 2024/181755

(57) **Abstract**

The present invention relates to a vertical rotary plant cultivation system and, more particularly, to a vertical rotary plant cultivation system comprising: an aerial rail installed along a circulatory track at a set height; vertical planting structures which rotate suspended from the aerial rail; a work platform installed at one side or both sides of the circulatory track; a drive means for continuously moving each planting structure along the aerial rail; and a water supply means for supplying water or nutrient solution to the crops planted in the planting structures.

## Description

### [Technical Field]

The present invention relates to a vertical rotary plant cultivation system, and more specifically, to a vertical rotary plant cultivation system including an aerial rail installed along a circular track disposed at a predetermined level, vertical planting structures that rotate while being suspended from the aerial rail, a work platform installed at one side or each of two sides of the circular track, a driving device that consecutively moves the planting structures along the aerial rail, and a water supply device that supplies water or a nutrient solution to crops planted in the planting structure.

### [Background Art]

Generally, crop cultivation systems may be mainly classified as outdoor cultivation or facility cultivation. Since crops are cultivated inside, for example, a glass greenhouse or a vinyl greenhouse, facility cultivation requires relatively higher facility costs as compared to outdoor cultivation. Accordingly, various types of vertical plant cultivation apparatuses have been developed to maximize the plant cultivation area within a limited land space.

For example, in Korean Patent No. 10-2436872 (August 23, 2022), a vertical hydroponic cultivation apparatus in which planting and harvesting are easy through free horizontal movement is disclosed. In particular, in Korean Patent No. 10-2467384 (November 10, 2022), a vertical hydroponic cultivation apparatus of which noise and vibrations are minimized is disclosed. In Korean Patent No. 10-2479560 (December 15, 2022), a vertical hydroponic cultivation apparatus of which space efficiency is improved and installation is easy is disclosed.

Among these, FIG. 1 shows the vertical hydroponic cultivation apparatus disclosed in Korean patent No. 10-2436872, and the apparatus includes a frame 10 in which a first rail 12 is provided at a lower end portion of a pipe 11, movable bodies 20 disposed in parallel to move along the first rail 12 while being suspended from the frame 10, a cultivation pot 30 mounted on a vertical surface of the movable body 20 and having planting holes 31 formed in an inclined direction, a light generating unit 40 installed at the other side of the cultivation pot 30 to radiate light toward the movable body 20, and a nutrient solution container 50 and a supply pump 60 which supply a nutrient solution to plants planted in the planting holes 31.

In the vertical hydroponic cultivation apparatus, since crops are plated on the vertical surface of the movable body 20 which extends in a vertical direction, it is possible to secure a maximized cultivation area within a limited space, and since the movable body 20 is movable along the frame 10, a working space can be easily secured as needed.

However, when planting crops in the cultivation pot 30 installed on the movable body 20 or harvesting crops therefrom, the workers should continuously move between the movable bodies 20, and in particular, when the movable bodies 20 have a high height, there still remains a considerable labor burden that the workers should continuously move a ladder, a support, or the like to perform work.

### [Related Art Documents]

### [Patent Documents]

1. Korean Patent No. 10-2436872 (August 23, 2022)
2. Korean Patent No. 10-2467384 (November 10, 2022)
3. Korean Patent No. 10-2479560 (December 15, 2022)

### [Detailed Description of Invention]

### [Technical Problem]

Accordingly, the problem to be solved by the present invention is to provide a new-concept vertical rotary plant cultivation system which allows a crop cultivation space to be used as efficiently as possible, and further, allows workers to work almost in place without moving a work position when planting crops or harvesting crops, thereby reducing fatigue due to labor and increasing work efficiency.

### [Technical Solution]

A vertical rotary plant cultivation system according to the present invention includes
an aerial rail installed along a circular track disposed at a predetermined level,
a plurality of planting structures, each of which has a planting surface for planting crops on one surface or both surfaces thereof and which move in a line along the circular track while one side thereof is suspended from the aerial rail such that the planting surface is vertically disposed,
a work platform installed at one side or each of two sides of the circular track to face the planting surface of the planting structure,
a driving device configured to consecutively move the planting structures along the aerial rail, and
a water supply device configured to supply water or a nutrient solution necessary for growing the crops planted in the planting structure.

The planting structure may be a grid-shaped structure having a hollow to accommodate roots of the crops, and a support roller rotating along the aerial rail may be installed at one side of the planting structure.

A planting mat, a planting net, or a planting pot configured to support roots of the crops may be installed on the planting surface of the planting structure.

The work platform may have a multi-layer structure, and a guardrail may be installed at an edge of each layer.

The water supply device may include a water-dropping hose or a spray nozzle installed along the aerial rail.

The aerial rail may have straight sections disposed in parallel at predetermined intervals and a curved section configured to serially connect the straight sections, and a lighting device configured to radiate light necessary for growing the crops may be installed between the planting surfaces of the planting structures at both sides which are adjacent to each other to move across each other in the straight section of the aerial rail.

### [Advantageous Effects]

A vertical rotary plant cultivation system according to the present invention has a structure in which the aerial rails are repeatedly disposed along straight sections and curved sections, and a plurality of vertical planting structures are sequentially suspended from the aerial rails, and thus there is an effect that a crop cultivation space can be used as efficiently as possible within a limited land area.

In addition, in a vertical rotary plant cultivation system according to the present invention, workers perform work without moving a working position on a work platform when planting crops in the planting structure or harvesting crops therefrom, and thus there is an effect of reducing fatigue due to labor and improving work efficiency.

### [Description of Drawings]

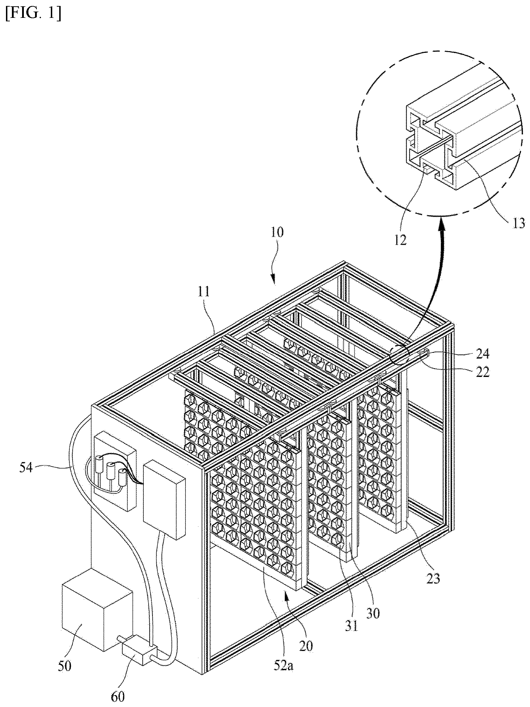

FIG. 1 is a view illustrating a conventional vertical hydroponic cultivation apparatus.
FIG. 2 is a view of a configuration of a vertical rotary plant cultivation system according to the present invention.
FIG. 3 is a partially exploded perspective view of FIG. 2.
FIG. 4 is a view illustrating an installation structure of lighting devices (40a, 40).

### [Best Mode]

Hereinafter, the present invention will be described in detail with reference to the accompanying drawings. However, since the accompanying drawings illustrate exemplary embodiments of the present invention, the scope of the present invention is not limited by these embodiments. In addition, even for components essential to the implementation of the present invention, a detailed description is omitted for matters that are disclosed in a related art or can be easily carried out by those skilled in the art from known technologies.

Among components belonging to the present invention, the term "~means" may refer to a unit that performs at least one common function or operation and may be implemented by hardware, software, or a combination thereof. In addition, "including" a component means that, in addition to the explicitly stated component, other components may be further included as needed.

A vertical rotary plant cultivation system according to the present invention includes an aerial rail 10 installed along a circular track disposed at a predetermined level, vertical planting structures 20 that rotate while being suspended from the aerial rail 10, a work platform 30 installed at one side or each of two sides of the circular track, a driving device (not shown in the drawing) that consecutively moves the planting structures 20 along the aerial rail 10, and a water supply device (not shown in the drawing) that supplies water or a nutrient solution to crops planted in the planting structure 20.

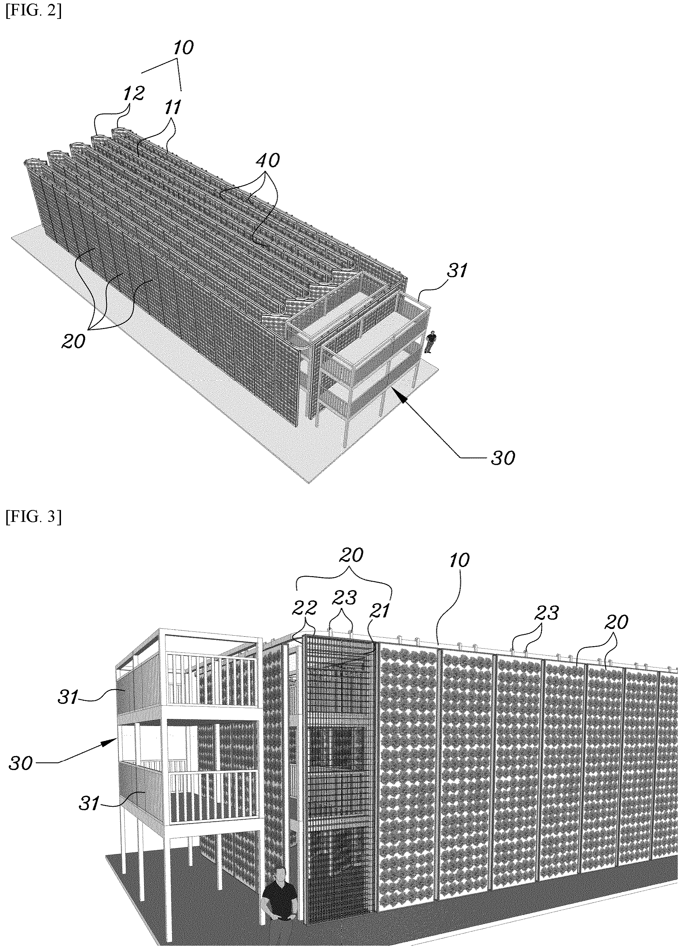

First, the aerial rail 10 is installed along the circular track disposed at the predetermined level from the ground. Here, the circular track may be a track that continuously loops without a start point and an end point, and in order to increase spatial efficiency, straight sections 11 and curved sections 12 may be alternately disposed as shown in FIG. 2.

In the straight section 11, the aerial rails 10 with a predetermined length are disposed in parallel at predetermined intervals, and the curved section 12 serially and smoothly connects end portions of the straight sections 11 at both sides. The aerial rail 10 may be supported on a ceiling of a facility house or a closed-type plant factory, and a support (not shown in the drawing) may be installed at an appropriate position.

Next, the planting structure 20 may have a planting surface for planting crops on one surface or both surfaces thereof and may have a plate-like structure having a hollow flat rectangular parallelepiped shape. While one short side is suspended from the aerial rail 10 such that the planting surface is vertically oriented, the planting structures 20 move in parallel in a line in a traveling direction of the aerial rail 10. Therefore, in the straight section 11, in a state in which the planting surfaces of a plurality of planting structures 20 form one plane, the planting structures 20 of the adjacent straight sections 11 move across each other in opposite directions.

According to an exemplary embodiment of the present invention, as shown in FIG. 3, the planting structure 20 may be a grid-shaped structure made of wires 21 and may have a hollow to accommodate roots of crops, and reinforcing rims 22 made of an angle member may be installed at edges of four sides thereof. Support rollers 23 that rotate along the aerial rail 10 may be installed at one side of the planting structure 20. In the accompanying drawing, two support rollers 23 are illustrated as being installed on each planting structure 20.

Crops planted in the planting structure 20 may be cultivated through hydroponics or aeroponics. To this end, at least one of a planting mat, a planting net, and a planting pot that supports roots of crops may be installed on the planting surface of the planting structure 20. As shown in FIG. 3, the planting structure 20 made of the wires 21 with a grid shape is lightweight and has a sturdy structure, and a planting mat, net, or pot is easily installed thereon.

The work platform 30 is a structure on which workers are positioned when planting crops in the planting structure 20 or harvesting crops therefrom and is installed at one side or each of two sides of the circular track to face the planting surface of the planting structure 20 moving along the aerial rail 10.

When the planting surface is provided on only one surface of the planting structure 20, the work platform 30 may be installed at only one side of the circular track with respect to the planting structure 20, and when the planting surface is provided on each of both surfaces of the planting structure 20, the work platform 30 may be installed at each of both sides of the circular track. When the work platform 30 is installed inside the circular track, an appropriate interval may be formed between some planting structures 20 to allow workers to access inside the circular track.

In addition, when the planting structure 20 has a high height, the work platform 30 may have a multi-layer structure for convenience of work. The accompanying drawing illustrates a case in which the work platform 30 has a three-layer structure. A guardrail 31 for the safety of workers may be installed at an edge of each layer of the work platform 30.

The driving device (not shown) may consecutively move the planting structures 20 along the aerial rail 10, and any conventional driving device may be installed as long as the conventional driving device may achieve the purpose of the present invention. According to one embodiment of the present invention, the driving device may include a driving motor, and the driving motor may be mounted at an upper side of each planting structure 20.

In this case, a driving gear driven by the driving motor may be installed at the upper side of the planting structure 20, and a cogged rail with which the driving gear engages may be installed on the aerial rail 10. On the other hand, the driving motor and the driving gear may be installed on the aerial rail 10, and the cogged rail may be installed on the planting structure 20.

One driving motor and one driving gear may be installed for each planting structure 20 or may be installed, for example, for every 4 to 5 planting structures 20. In this case, the planting structures 20 that are not provided with the driving gear may be connected to each other by connection ropes to be pulled by the planting structures 20 provided with the driving gear.

Finally, the water supply device (not shown) supplies water or a nutrient solution to crops planted in the planting structure 20 and may include, for example, a water-dropping hose or a spray nozzle. For example, by installing the water-dropping hose or the spray nozzle along the aerial rail 10, water or a nutrient solution may be supplied to flow from top to bottom along a mat or a net installed on the planting structure 20.

In addition, in the case of aeroponics in which roots of crops are exposed, water and a nutrient solution may be sprayed directly onto the roots of the crops using spray nozzles. In this case, the planting surface may be formed on one surface of the planting structure 20, the crops may be planted such that the roots of the crops are exposed at a side opposite to the planting surface, and then the spray nozzle may be disposed at the side opposite to the planting surface. Such aeroponics has an advantage that a minimal weight burden is imposed on the planting structure 20.

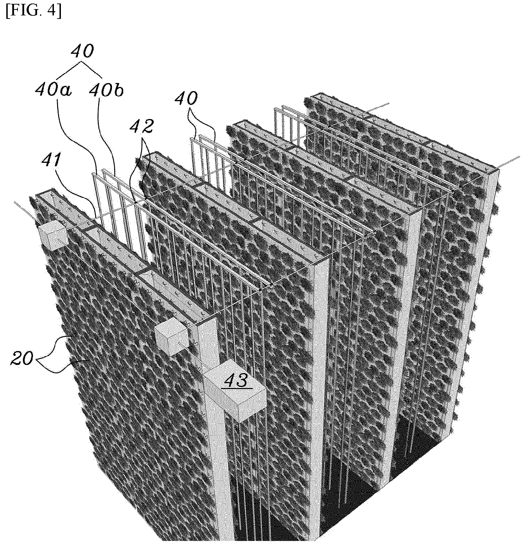

Meanwhile, when the plant cultivation system according to the present invention is applied to facility cultivation, the plant cultivation system may further include a lighting device 40 that radiates light necessary for crop growth. As shown in FIGS. 2 and 4, the lighting device 40 may be installed between the planting surfaces of the planting structures 20 at both sides that are adjacent to each other to move across each other in the straight section 11 of the aerial rail 10.

In addition, the lighting device 40 may be provided as a light-emitting diode (LED) and may be installed to be movable toward the planting surfaces of the planting structures 20 at both sides. For example, as shown in FIG. 4, a screw rod 41 may be installed in a direction intersecting the straight section 11, and two lighting devices 40a and 40b may be installed on the screw rod 41. The screw rod 41 may be supported on the aerial rail 10 or a separate support (not shown in the drawing) not to impede the movement of the planting structure 20, and the lighting devices 40a and 40b may be supported on the screw rod 41 by a screw pipe 42 in which female screws are disposed in opposite directions.

Therefore, when the screw rod 41 rotates, the lighting devices 40a and 40b at both sides may be installed to be movable in opposite directions, thereby moving toward or away from the planting surfaces of the planting structures 20 at both sides. Therefore, an interval between the lighting devices 40a and 40b and the planting surfaces may be adjusted according to a growth state of crops. In FIG. 4, the undescribed reference numeral "43" denotes a "driving motor" that rotates the screw rod 41.

In the present invention, the water supply device, the driving device, the lighting device, and the like may be automatically controlled by a separate central control unit using the Internet of Things (IoT), artificial intelligence (AI), various wireless communications, or the like. Therefore, the driving device consecutively moves the planting structure 20 along the aerial rail 10 at a predetermined time interval. In this case, the water supply device and the lighting device sequentially supply water, nutrients, and light necessary for crop growth according to preset conditions. Therefore, crops planted in each planting structure 20 may be grown at a uniform level.

When planting crops in the planting structure 20 or harvesting crops therefrom, workers may perform necessary work on the planting structures 20 that sequentially move on the work platform 30. In addition, a robot employing IoT or AI technology may be installed on the work platform 30 to automatically perform work such as sowing, planting, harvesting, and moving harvested crops. Therefore, since workers do not need to move a working position or carry heavy harvested crops, fatigue caused by labor may be significantly reduced.

According to a vertical rotary plant cultivation system according to the present invention, in particular, when leafy vegetables such as lettuce, bok choy, and chicory, or various mushrooms such as shiitake, button, and oyster mushrooms are cultivated, it is expected that productivity can be significantly increased relative to a cultivation space, while a labor burden can be greatly reduced.

**<Description of reference numerals>**

| | | | |
|---|---|---|---|
| 10: | aerial rail | 11: | straight section |
| 12: | curved section | 20: | planting structure |
| 21: | wire | 22: | reinforcing rim |
| 23: | support roller | 30: | work platform |
| 31: | guardrail: | 40, 40a, 40b: | lighting device |
| 41: | screw rod | 42: | screw pipe |
| 43: | driving motor | | |

## Claims

1. A vertical rotary plant cultivation system comprising:
an aerial rail installed along a circular track disposed at a predetermined level;
a plurality of planting structures, each of which has a planting surface for planting crops on one surface or both surfaces thereof and which move in a line along the circular track while one side thereof is suspended from the aerial rail such that the planting surface is vertically disposed;
a work platform installed at one side or each of two sides of the circular track to face the planting surface of the planting structure;
a driving device configured to consecutively move the planting structures along the aerial rail; and
a water supply device configured to supply water or a nutrient solution necessary for growing the crops planted in the planting structure.

2. The vertical rotary plant cultivation system of claim 1, wherein the planting structure is a grid-shaped structure having a hollow to accommodate roots of the crops, and
a support roller rotating along the aerial rail is installed at one side of the planting structure.

3. The vertical rotary plant cultivation system of claim 1, wherein a planting mat, a planting net, or a planting pot configured to support roots of the crops is installed on the planting surface of the planting structure.

4. The vertical rotary plant cultivation system of claim 1, wherein the work platform has a multi-layer structure, and a guardrail is installed at an edge of each layer.

5. The vertical rotary plant cultivation system claim 1, wherein the water supply device is a water-dropping hose installed along the aerial rail to allow the water or the nutrient solution to flow or a spray nozzle configured to spray the water or the nutrient solution toward roots of the crops planted in the planting structure.

6. The vertical rotary plant cultivation system of claim 1, wherein the aerial rail has straight sections disposed in parallel at predetermined intervals and a curved section configured to serially connect the straight sections, and
a lighting device configured to radiate light necessary for growing the crops is installed between the planting surfaces of the planting structures at both sides which are adjacent to each other to move across each other in the straight section of the aerial rail.

7. The vertical rotary plant cultivation system of claim 6, wherein the lighting device is installed to be movable toward or away from the planting surfaces of the planting structures at both sides.
